# EUROPEAN PATENT SPECIFICATION

(11) **EP 2 538 470 B1**
(45) Date of publication and mention of the grant of the patent: **23.03.2016**
(21) Application number: 12162001.7
(22) Date of filing: 29.03.2012
(51) Int. Cl.: H01M 2/12, H01M 10/04, H01M 6/42

(54) **Battery module**
Batteriemodul
Module de batterie

(30) Priority: 23.06.2011 US 201161500304 P; 27.12.2011 US 201113337701
(43) Date of publication of application: 26.12.2012
(73) Proprietor: Samsung SDI Co., Ltd., Gyeonggi-do 449-577 (KR); Robert Bosch GmbH, 70442 Stuttgart (DE)
(72) Inventor: Kim, Myung-Chul, Gyeonggi-do (KR)
(74) Representative: Gulde & Partner

(56) References cited:
- EP-A2- 1 091 431
- WO-A1-2009/128214
- WO-A1-2011/033713
- DE-U1- 8 414 397
- US-A1- 2007 218 351
- US-B1- 6 410 177

## Description

The present invention relates to a battery module including a plurality of battery cells.

### DISCUSSION OF RELATED ART

Recently, a high-output battery module using a nonaqueous electrolyte having a high energy density is developed. In the high-output battery module, a plurality of battery cells are connected in series to constitute a high-capacity battery module so that it is used for apparatuses requiring high power, e.g., for driving a motor of an electric car. A battery cell includes an electrolyte and an electrode assembly formed of a positive plate and a negative plate and generates energy by electrochemical reaction between the plates and the electrolyte. Here, gas may be generated in the battery cells due to side reactions of the electrochemical reaction. Thus, the battery module may have a gas passage or outlet to efficiently deal with gas generated in a plurality of battery cells.

WO2011/033713 discloses a battery module according to the preamble of claim 1.

### SUMMARY OF THE INVENTION

An aspect of the present invention is to provide a battery module securing tightness of gas generated in a plurality of battery cells.

Another aspect of the present invention is to provide a battery module having a simplified assembly process.

According to the present invention, there is provided a battery module as stated in claim 1.

Further aspects of the invention could be learned from the embodiments of the dependent claims and the description.

Aspects of the present invention provide a battery module which secures tightness of gas generated in a plurality of battery cells due to a simplified working process, thereby preventing gas discharged from the battery cells from leaking to the outside.

Further, the battery module has a simplified assembly process since an insulation member and a cover are assembled in advance.

In addition, alignment of a vent and the insulation member is facilitated, thereby improving assembly efficiency of the battery module.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery module according to one exemplary embodiment;
FIG. 2 is an exploded perspective view of the battery module of FIG. 1;
FIG. 3A is an enlarged perspective view of a cover of FIG. 1;
FIG. 3B is a perspective view of the cover of FIG. 1 which is turned;
FIG. 4A is a cross-sectional view taken along line A-A' of FIG. 1; and
FIG. 4B is an enlarged view of a portion B of FIG. 4A.

### DETAILED DESCRIPTION OF THE INVENTION

Reference will now be made in detail to exemplary embodiments of the present invention, examples of which are illustrated in the accompanying drawings. The embodiments are described below in order to explain the present invention by referring to the figures. It will be understood that when an element or layer is referred to as being "on" or "connected to" another element or layer, the element or layer can be directly on or electrically connected to another element or layer or intervening elements or layers. Descriptions of unnecessary parts or elements may be omitted for clarity and conciseness, and like reference numerals refer to like elements throughout. In the drawings, the size and thickness of layers and regions may be exaggerated for clarity and convenience.

Hereinafter, the present invention will be described in detail with reference to the accompanying drawings.

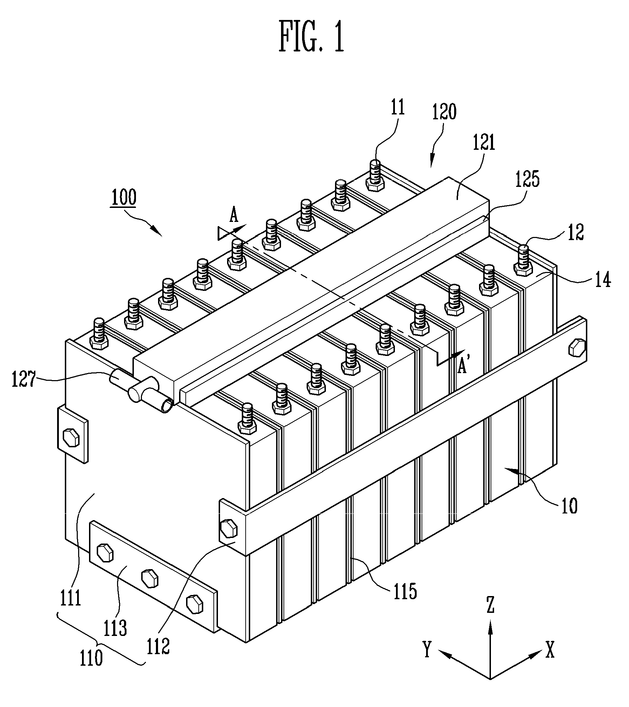

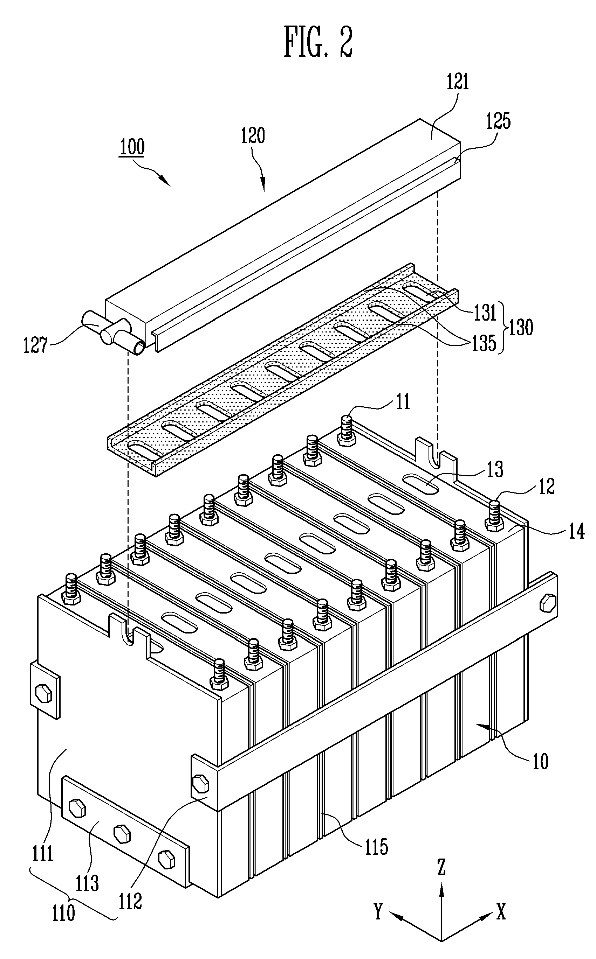

FIG. 1 is a perspective view of a battery module according to one exemplary embodiment, FIG. 2 is an exploded perspective view of the battery module of FIG. 1,

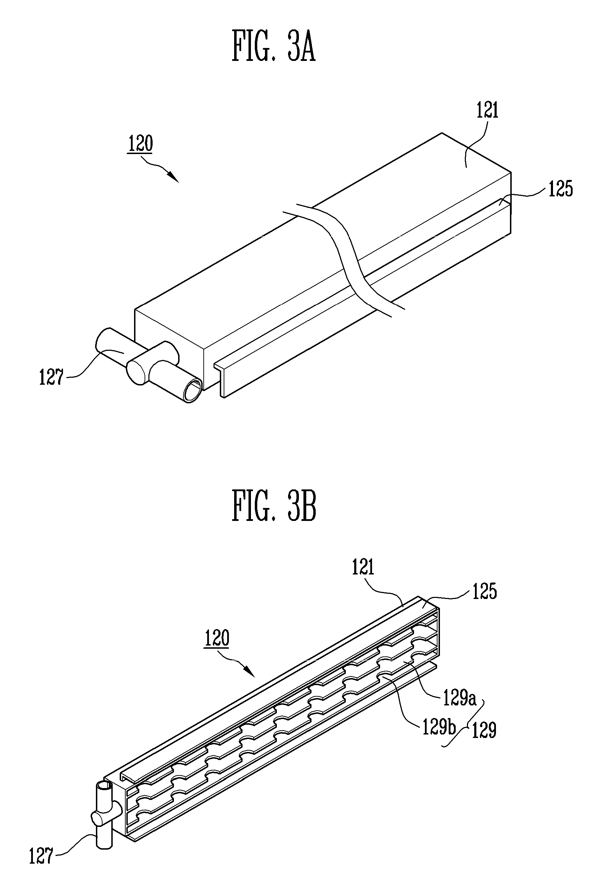

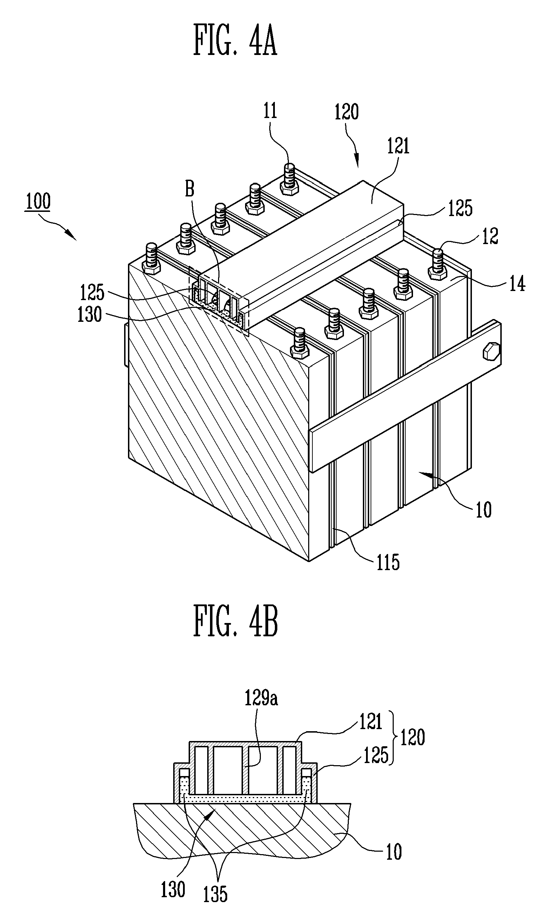

FIG. 3A is an enlarged perspective view of a cover of FIG. 1, FIG. 3B is a perspective view of the cover of FIG. 1 which is turned, FIG. 4A is a cross-sectional view taken along line A-A' of FIG. 1, and FIG. 4B is an enlarged view of a portion B of FIG. 4A.

Referring to FIGS. 1 to 3A, the battery module 100 according to the present embodiment includes a plurality of battery cells 10 having a vent 13 and arranged in one direction, a cover 120 including a body part 121 covering the vent 13 and a notch (or accommodating part) 125 formed on at least part of the body part 121, and an insulation member 130 disposed corresponding to the vent 13 and including a bent part 135 accommodated in the notch 125.

Here, the notch 125 is formed on an outside of the cover 120 along a lengthwise direction of the cover 120, and the bent part 135 of the insulation member 130 is accommodated in the notch 125. The bent part 135 of the insulation member 130 is formed by bending part of the insulation member 130 in a z-axis direction. In the present embodiment, the notch 125 is formed on the outside of the cover 120, without being limited thereto. For example, the notch 125 may be formed in the cover 120.

Here, the insulation member 130 may be formed of a heat resistant, elastic material, like rubber and silicone. Thus, the bent part 135 of the insulation member 130 is forcibly inserted and closely fit into the notch 125 of the cover 120 and accommodated in the notch 125, affording no space. Accordingly, gas tightness of the insulation member 130 and the cover 120 is secured to prevent gas discharged from the battery cells 10 from leaking to the outside. Further, since the insulation member 130 and the cover 120 are assembled in advance, an assembly process of the battery module 100 is simplified. In detail, alignment of the vent 13 of the battery cells 10 and the insulation member 130 is facilitated, thereby improving assembly efficiency of the battery module 100.

Referring to FIGS. 2 to 4B, the body part 121 of the cover 120 has a hexahedral shape, an inward side of which is open in one direction, and is seated on the battery cells 10 such that the open side of the body part 121 faces the vent 13. Here, the body part 121 of the cover 120 may include an outlet 127 of gas at one end and is closely in contact with the insulation member 130 to form a gas passage connected to the outlet 127.

At least one rib 129 may be formed on the open inward side of the body part 121 of the cover 120. Here, the rib 129 may be formed in a lengthwise direction of the body part 121 and include a contact part 129a in contact with the insulation member 130 and the non-contact part 129b open corresponding to the vent 13. Here, the cover 120 may have a shape nearly corresponding to the insulation member 130.

When the rib 129 is formed on the open inward side of the body part 121 of the cover 120, gas tightness of the cover 120 and the insulation member 130 is further improved. In detail, the non-contact part 129b of the rib 129 is formed corresponding to an opening 131 of the insulation member 130, and the contact part 129a is in contact with the insulation member 130 between the openings 131 to press the insulation member 130. That is, the non-contact part 129b of the rib 129 does not disturb gas discharge from the opening 131 of the insulation member 130 open corresponding to the vent 13, and the contact part 129a of the rib 129 is in contact with the insulation member 130 between the openings 131 while pressing the insulation member 130, thereby improving gas tightness of the cover 120 and the insulation member 130.

The insulation member 130 is disposed between the cover 120 and the battery cells 10. Here, the bent part 135 of the insulation member 130 is accommodated in the notch 125 of the cover 120, and the other part of the insulation member 130 than the bent part 135 is in contact with the contact part 129a of the rib 129, being pressed thereby. The cover 120 covering the insulation member 130 is closely in contact with the insulation member 130 to maintain gas tightness of the gas passage. Further, the insulation member 130 may further include the opening 131 corresponding to the vent 13 of the battery cells 10, and the rib 129 includes the non-contact part 129b open corresponding to the vent 13, and accordingly gas discharge from the battery cells 10 is not disturbed.

According to the present embodiment, gas tightness of the insulation member 130 and the cover 120 is secured, thereby preventing gas discharged from the battery cells 10 from leaking to the outside. Further, since the insulation member 130 and the cover 120 are assembled in advance, the assembly process of the battery module 100 is simplified. In detail, alignment of the vent 13 of the battery cells 10 and the insulation member 130 is facilitated to improve the assembly efficiency of the battery module 100.

The battery cells 10 may generate gas due to byproducts of electrode plates and an electrolyte with repeated charge and discharge, and such gas may be discharged through the vent 13. The gas is discharged to the outside through the outlet 127 formed in the cover 120. Here, the outlet 127 may have a T shape, left and right sides of which are open so that the gas does not affect neighboring battery modules 100.

The insulation member 130 may be formed in a single body. The insulation member 130 may be a gasket formed of a heat resistant material and preventing gas leakage. The battery cells 10 generate heat with repeated charge and discharge. Here, the plurality of battery cells 10 may emit high-temperature heat around and melt the insulation member 130 mounted on the battery cells 10. When the insulation member 130 is melted, sealing efficiency between the insulation member 130 and the cover 120 may be reduced, so that gas may leak.

Generally, an exterior case of the battery cells 10 is formed of metal, and the cover 120 is formed of a plastic resin. Here, when the battery cells 10 and the cover are in contact with each other, contact is not easy due to different materials of the battery cells 10 and the cover 120, and thus gas may leak in an insecure contact part. Thus, a gasket may be formed between the battery cells 10 and the cover 120 to conveniently maintain gas tightness of the battery cells 10 and the cover 120.

The insulation member 130 formed in the single body may seal a plurality of vents 13 of the battery cells 10 at the same time. Here, the insulation member 130 may include a plurality of openings 131 corresponding to the vents 13.

The battery cells 10 may include a battery case having an open part and a cap plate 14 covering the open part. The battery case accommodates an electrolyte and an electrode assembly formed of a positive plate, a negative plate, and a separator disposed between the plates. The cap plate 14 includes a positive electrode 11 connected to the positive plate and a negative electrode 12 connected to the negative plate, the electrodes being at opposite end portions and protruding to the outside. The positive plate and the negative plate constituting the electrode assembly reacts with the electrolyte to generate energy, which is transmitted to the outside through the positive electrode 11 and the negative electrode 12.

Further, the vent 13 disposed between the positive electrode 11 and the negative electrode 12 of the cap plate 14 serves as a passage of gas discharged from the battery cells 10 when pressure of gas generated in the battery cells 10 is a predetermined level or more. Thus, the vent 13 prevents damage of the battery cells 10 due to internal pressure.

In the present embodiment, the plurality of battery cells 10 are arranged in one direction. Here, the battery cells 10 are arranged parallel with wider front sides facing each other. The vents 13 are positioned in a center portion of the battery cells 10 and disposed in a nearly straight line along the arranged battery cells 10. The positive electrodes 11 and the negative electrodes 12 of two neighboring battery cells 10 are electrically connected to each other through a metal bus-bar (not shown).

A housing 110 may include a pair of end plates 111 spatially spaced from each other in one direction and a plurality of connecting members connecting the end plates 111. The connecting members may include a side bracket 112 connecting lateral sides of the end plates 111 and a bottom bracket 113 connecting bottom sides of the end plates 111. The plurality of battery cells 10 may be accommodated between the end plates 111.

The end plates 111 are disposed to be in surface contact with outermost battery cells 10, respectively, and press the plurality of battery cells 10 inward. Further, the side bracket 112 is connected to one end portion and the other end portion of the end plates 111 to support opposite lateral sides of the battery cells 10. Here, bottom sides of the battery cells 10 may be supported by the bottom bracket 113, and opposite end portions of the bottom bracket 113 are connected to the end plates 111.

The plurality of battery cells 10 supported by the end plates 111, the side bracket 112, and the bottom bracket 113 are arranged therein with the positive electrodes 11 and the negative electrodes 12 being disposed alternately and connected in series using bus-bars. A connection structure and the number of battery cells 10 may be changed variously depending on a design of the battery module 100.

Hence, there is provided a battery module which secures tightness of gas generated in a plurality of battery cells due to a simplified working process, thereby preventing gas discharged from the battery cells from leaking to the outside.

Further, the battery module has a simplified assembly process since an insulation member and a cover are assembled in advance.

In addition, alignment of a vent and the insulation member is facilitated, thereby improving assembly efficiency of the battery module.

In the present embodiment, a polygonal lithium ion secondary battery is illustrated as an example of the battery cell, but the present invention is not limited to the embodiment. The present invention may be applied to various types and shapes of batteries such as a lithium polymer battery or a cylindrical battery.

## Claims

1. A battery module (100), comprising:
a plurality of battery cells (10) with a vent (13), the battery cells (10) being arranged in longitudinal direction of the battery module (100) such that the vent (13) of each battery cell (10) is aligned with the vent (13) of an adjacent battery cell (10); and
a cover (120) including a body part (121) extending in longitudinal direction of the battery module (100) to enclose the vents (13) and providing a common gas discharge pathway for the vents (13) in the interior of the body part (121); **characterized by** an insulation member (130) disposed between the battery cells (10) and the cover (120), wherein the insulation member (130) includes a bent part (135) engaged with the cover (120) for sealing the gas discharge pathway.

2. The battery module of claim 1, wherein the cover (120) includes a notch (125) formed along a longitudinal side wall of the cover (120).

3. The battery module of claim 2, wherein the bent part (135) of the insulation member (130) is accommodated in the notch (125).

4. The battery module of any of the preceding claims, wherein the cover (120) includes a gas outlet (127) at one end thereof.

5. The battery module of any of the preceding claims, wherein the insulation member (130) includes openings (131) corresponding to the vents (13).

6. The battery module of any of the preceding claims, wherein the cover (120) includes at least one rib (129) extending toward the battery cells (10) from an inward-facing side of the body part (121) and extending in lengthwise direction of the body part (121).

7. The battery module of claim 6, wherein the rib (129) includes a contact part (129a) being in contact with the insulation member (130) and a non-contact part (129b) that does not contact the insulation member (130).

8. The battery module of claims 5 and 7, wherein the non-contact part (129b) corresponds to the openings (131) of the insulation member (130).

9. The battery module of any of the preceding claims, wherein the insulation member (130) is formed in a single body.

10. The battery module of any of the preceding claims, wherein the insulation member (130) is made of a heat resistant, elastic material.

11. The battery module of any of the preceding claims, wherein the cover (120) is made of a plastic material.

12. The battery module of claim 2, wherein the bent part (135) is in press-fit engagement with the notch (125).

13. The battery module of claim 2 or 12, wherein the notch (125) is positioned outside or inside of the body part (121).

14. The battery module of any of the preceding claims, wherein the cover (120) and the insulation member (130) are a pre-assembled unit.

15. The battery module of claim 7 or 8, wherein the non-contact part (129b) corresponds to the vent (13).

## Patentansprüche

1. Ein Batteriemodul (100), umfassend:
eine Vielzahl an Batteriezellen (10) mit einer Entlüftungsöffnung (13), wobei die Batteriezellen (10) in Längsrichtung des Batteriemoduls (100) angeordnet sind, sodass die Entlüftungsöffnung (13) jeder Batteriezelle (10) mit der Entlüftungsöffnung (13) einer benachbarten Batteriezelle (10) gefluchtet ist;
eine Abdeckung (120), die einen Gehäuseteil (121) umfasst, der sich in Längsrichtung des Batteriemoduls (100) erstreckt, um die Entlüftungsöffnungen (13) einzuschließen, und einen gemeinsamen Gasentladungsweg für die Entlüftungsöffnungen (13) im Inneren des Gehäuseteils (121) bereitstellt;
**gekennzeichnet durch** ein Isolationselement (130), das zwischen den Batteriezellen (10) und der Abdeckung (120) angeordnet ist, wobei das Isolationselement (130) einen gebogenen Teil (135) umfasst, der mit der Abdeckung (120) in Eingriff ist, um den Gasentladungsweg abzudichten.

2. Das Batteriemodul des Anspruchs 1, wobei die Abdeckung (120) eine Aussparung (125) umfasst, die entlang einer Längsseitenwand der Abdeckung (120) ausgebildet ist.

3. Das Batteriemodul des Anspruchs 2, wobei der gebogene Teil (135) des Isolationselements (130) in der Aussparung (125) untergebracht ist.

4. Das Batteriemodul eines der vorhergehenden Ansprüche, wobei die Abdeckung (120) einen Gasauslass (127) an einem Ende davon umfasst.

5. Das Batteriemodul eines der vorhergehenden Ansprüche, wobei das Isolationselement (130) Öffnungen (131) umfasst, die den Entlüftungsöffnungen (13) entsprechen.

6. Das Batteriemodul eines der vorhergehenden Ansprüche, wobei die Abdeckung (120) zumindest eine Rippe (129) umfasst, die sich von einer nach innen gewandten Seite des Gehäuseteils (121) zu den Batteriezellen (10) erstreckt und sich in Längsrichtung des Gehäuseteils (121) erstreckt.

7. Das Batteriemodul des Anspruchs 6, wobei die Rippe (129) einen Kontaktteil (129a), der in Kontakt mit dem Isolationselement (130) ist, und einen Nichtkontaktteil (129b), der das Isolationselement (130) nicht kontaktiert, umfasst.

8. Das Batteriemodul der Ansprüche 5 und 7, wobei der Nichtkontaktteil (129b) den Öffnungen (131) des Isolationselements (130) entspricht.

9. Das Batteriemodul eines der vorhergehenden Ansprüche, wobei das Isolationselement (130) in einem einzelnen Gehäuse ausgebildet ist.

10. Das Batteriemodul eines der vorhergehenden Ansprüche, wobei das Isolationselement (130) aus einem wärmebeständigen, elastischen Material gemacht ist.

11. Das Batteriemodul eines der vorhergehenden Ansprüche, wobei die Abdeckung (120) aus einem Kunststoff gemacht ist.

12. Das Batteriemodul des Anspruchs 2, wobei der gebogene Teil (135) in Presspassung mit der Aussparung (125) in Eingriff ist.

13. Das Batteriemodul des Anspruchs 2 oder 12, wobei die Aussparung (125) außerhalb oder innerhalb des Gehäuseteils (121) positioniert ist.

14. Das Batteriemodul eines der vorhergehenden Ansprüche, wobei die Abdeckung (120) und das Isolationselement (130) eine vormontierte Einheit sind.

15. Das Batteriemodul des Anspruchs 7 oder 8, wobei der Nichtkontaktteil (129b) der Entlüftungsöffnung (13) entspricht.

## Revendications

1. Module de batterie (100), comprenant :
une pluralité d'éléments de batterie (10) avec un évent (13), les éléments de batterie (10) étant agencés dans la direction longitudinale du module de batterie (100) de sorte que l'évent (13) de chaque élément de batterie (10) soit aligné avec l'évent (13) d'un élément de batterie adjacent (10) ; et
un couvercle (120) comportant une partie de corps (121) s'étendant dans la direction longitudinale du module de batterie (100) pour renfermer les évents (13) et fournissant un trajet d'évacuation de gaz commun pour les évents (13) à l'intérieur de la partie de corps (121) ;
**caractérisé par** un élément d'isolation (130) disposé entre les éléments de batterie (10) et le couvercle (120), où l'élément d'isolation (130) comporte une partie courbée (135) engagée avec le couvercle (120) pour sceller le trajet d'évacuation de gaz.

2. Module de batterie de la revendication 1, dans lequel le couvercle (120) comporte une encoche (125) formée le long d'une paroi latérale longitudinale du couvercle (120).

3. Module de batterie de la revendication 2, dans lequel la partie courbée (135) de l'élément d'isolation (130) est logée dans l'encoche (125).

4. Module de batterie de l'une des revendications précédentes, dans lequel le couvercle (120) comporte une sortie de gaz (127) au niveau d'une extrémité de celui-ci.

5. Module de batterie de l'une des revendications précédentes, dans lequel l'élément d'isolation (130) comporte des ouvertures (131) correspondant aux évents (13).

6. Module de batterie de l'une des revendications précédentes, dans lequel le couvercle (120) comporte au moins une nervure (129) s'étendant vers les éléments de batterie (10) depuis un côté tourné vers l'intérieur de la partie de corps (121) et s'étendant dans la direction de la longueur de la partie de corps (121).

7. Module de batterie de la revendication 6, dans lequel la nervure (129) comporte une partie de contact (129a) étant en contact avec l'élément d'isolation (130) et une partie sans contact (129b) qui n'entre pas en contact avec l'élément d'isolation (130).

8. Module de batterie des revendications 5 et 7, dans lequel la partie sans contact (129b) correspond aux ouvertures (131) de l'élément d'isolation (130).

9. Module de batterie selon l'une des revendications précédentes, dans lequel l'élément d'isolation (130) est formé en un seul corps.

10. Module de batterie de l'une des revendications précédentes, dans lequel l'élément d'isolation (130) est réalisé en un matériau élastique résistant à la chaleur.

11. Module de batterie de l'une des revendications précédentes, dans lequel le couvercle (120) est réalisé en un matériau plastique.

12. Module de batterie de la revendication 2, dans lequel la partie courbée (135) est en prise à ajustement par pression avec l'encoche (125).

13. Module de batterie de la revendication 2 ou 12, dans lequel l'encoche (125) est positionnée à l'extérieur ou à l'intérieur de la partie de corps (121).

14. Module de batterie de l'une des revendications précédentes, dans lequel le couvercle (120) et l'élément d'isolation (130) sont une unité pré-assemblée.

15. Module de batterie de la revendication 7 ou 8, dans lequel la partie sans contact (129b) correspond à l'évent (13).
